# EUROPÄISCHE PATENTSCHRIFT

(11) **EP 0 941 912 B1**
(45) Veröffentlichungstag und Bekanntmachung des Hinweises auf die Patenterteilung: **02.05.2002**
(21) Anmeldenummer: 99103511.4
(22) Anmeldetag: 24.02.1999
(51) Int. Cl.: B62D 21/11

(54) **Kraftfahrzeug mit einem flächigen Versteifungselement**
Motor vehicle with a plate-like reinforcing member
Véhicule à moteur comportant un élément de renfort en forme de plaque

(30) Priorität: 09.03.1998 DE 19810123
(43) Veröffentlichungstag der Anmeldung: 15.09.1999
(73) Patentinhaber: Bayerische Motoren Werke Aktiengesellschaft, 80788 München (DE)
(72) Erfinder: Ertlmaier, Stephan, 80634 München (DE); Schörghuber, Hans, 84079 Bruckberg (DE)

(56) Entgegenhaltungen:
- EP-A- 0 274 993
- EP-A- 0 760 327
- DE-A- 3 242 604
- DE-A- 3 301 708
- DE-A- 3 322 334
- DE-A- 4 244 217
- GB-A- 2 295 127

## Beschreibung

Die Erfindung betrifft einen als Achsträger ausgebildeten Hilfsrahmen eines Kraftfahrzeugs, mit seitlichen Längsträgern, wobei an jedem Längsträger ein Lagerbock zur Aufnahme eines Lenkers des Fahrzeug-Fahrwerks sowie zwischen den Längsträgern ein flächiges Versteifungselement vorgesehen ist. Ein Kraftfahrzeug mit diesen Merkmalen ist aus der EP-A-0 760 327 bekannt.

Kraftfahrzeuge bzw. deren Aufbauten oder allgemein deren Struktur sind/ist einer Vielzahl von Belastungen ausgesetzt. Viele Kräfte werden dabei über das Fahrwerk eingeleitet, welches im Hinblick auf optimale Fahreigenschaften neben den erforderlichen Bewegungs-Freiheitsgraden auch eine gewisse Stabilität aufweisen sollte bzw. ausreichend stabil mit der Struktur des Kraftfahrzeugs verbunden sein sollte. Insbesondere für den Frontbereich eines Kraftfahrzeuges spielt ferner die Crash-Sicherheit eine wesentliche Rolle, d.h. die aus einem Unfall bzw. Zusammenstoss des Kraftfahrzeuges resultierenden Verformungen des Aufbaus sollten im Hinblick auf eine maximale Sicherheit der Fahrzeuginsassen gesteuert werden.

In der eingangs genannten EP-A-760 327 ist ein Fahrzeugaufbau beschrieben, bei dem ein Versteifungselement in Form eine sog. Trägerplatte an separaten Streben befestigt ist, die ihrerseits mit den üblichen Längsträgern des Fzg.-Aufbaus verbunden sind. Diese Unterboden-Anordnung befindet sich dabei im Heckbereich des (insbesondere oben offenen) Fahrzeuges und soll insbesondere die Torsionssteifigkeit des Fzg.-Aufbaus erhöhen. Daneben kann mit dieser speziellen Trägerplatte, in die ein Querträger integriert ist, auch eine Querverschiebung eines die Radaufhängung aufnehmenden Seitenträgers verhindert werden, wobei sich diese Radaufhängung direkt bei diesem integrierten Querträger befindet.

Eine Trägerplatte oder ein ähnliches Versteifungselement, wie es bspw. auch in der DE-A-42 44 217 beschrieben ist, ist somit grundsätzlich vorteilhaft, wobei noch darauf hingewiesen sei, dass versteifende Deckbleche als solche auch in verschiedenen anderen Ausführungsformen bekannt sind, wie bspw. die deutsche Patentschrift 934 628 zeigt. Dort verschließen diese Deckbleche Hohlräume in einem wannenförmigen Untergestell, das sich über nahezu die gesamte Länge des Kraftfahrzeuges erstreckt und keine separaten Längsträger aufweist. Ferner ist bspw. aus der DE 32 42 604 C2 ein flächiges Bauteil an der Unterseite des Motorraums bekannt, das als Tragteil ausgebildet ist und das Antriebsaggregat sowie die Querlenker der Vorderradaufhängung unmittelbar aufnimmt.

Mit der vorliegenden Erfindung soll nun aufgezeigt werden, wie mit einem an sich bekannten Versteifungselement (insbesondere im Frontbereich eines Kraftfahrzeuges) nicht nur die Fahrwerkspräzision und die für den Fahrkomfort entscheidende Quersteifigkeit des von (üblichen) Längsträgern gebildeten Endabschnittes von Kraftfahrzeugen erheblich erhöht werden kann, sondern wie gleichermaßen Vorteile bei einseitiger Krafteinleitung insbesondere im Fall eines Fahrzeug-Aufpralls (Offset-Crash) erzielt werden können (= Aufgabe der Erfindung).

Die Lösung dieser Aufgabe ist dadurch gekennzeichnet, dass die beiden Längsträger im wesentlichen parallel zur Fahrzeug-Fahrtrichtung verlaufen und dass das zumindest im Zentralbereich im wesentlichen eine Fläche beschreibende Versteifungselement in Fahrtrichtung betrachtet vor und hinter den Lagerböcken lösbar mit den Längsträgern verbunden ist. Vorteilhafte Weiterbildungen sind Inhalt der Unteransprüche.

Kerngedanke der Erfindung ist es, zwischen die beiden Längsträger ein flächiges Versteifungselement einzusetzen, das als sogenanntes "Schubfeld" wirkt und eine Kraft, die in einen der Längsträger eingeleitet wird, auf den gegenüberliegenden Längsträger überträgt. Hierdurch erhöht sich die für die Fahrwerkspräzision und den Fahrkomfort entscheidende Quersteifigkeit des von den Längsträgern gebildeten Endabschnitts des Kraftfahrzeuges erheblich, so daß sich insbesondere bei der Einleitung von Seitenkräften Vorteile ergeben. Wesentlichen Einfluss hat hierbei die Tatsache, dass dieses Schubfeld vor und hinter den Lagerböcken zur Lenker-Aufnahme mit den Längsträgern verbunden ist. Die Lösbarkeit dieser Verbindung ermöglicht dabei eine relativ einfache Zugänglichkeit des oberhalb des Schubfeldes liegenden Raumes, was insbesondere im Frontbereich des Kraftfahrzeugs, wo sich oberhalb des Schubfeldes zumeist das Kraftfahrzeug-Antriebsaggregat befindet, von Bedeutung ist.

Neben der Erhöhung der Fahrwerkspräzision und des Fahrkomforts wird mit dem sog. "Schubfeld" bei einseitiger Krafteinleitung im Fall eines Fahrzeugaufpralls (Offset-Crash) ein Mittragen der jeweils nicht betroffenen Fahrzeugseite erreicht und dadurch die typische Verschiebung der Längsträger gegeneinander ("Parallelogrammverformung") verhindert.

Im Vergleich zu rohrförmigen, quer oder diagonal zur Fahrtrichtung verlaufenden Versteifungselementen zeichnet sich das erfindungsgemäße flächige Versteifungselement durch seine geringe Bauhöhe aus. Hierdurch kann ein oberhalb des Schubfeldes angeordnetes Kfz.-Antriebsaggregat mit tiefem Schwerpunkt in das Kraftfahrzeug eingesetzt werden. Daneben dient das flächige Versteifungselement als fahrbahnseitiger Schutz für das Antriebsaggregat und ist damit auch für geländegängige Fahrzeuge in besonderer Weise geeignet. Darüber hinaus verbessert die glattflächige Ausbildung des Versteifungselementes den Luftwiderstand des Fahrzeuges im Unterbodenbereich. Auch kann das flächige Versteifungselement als Bestandteil einer Kapselung des Antriebsaggregates (zur Geräuschdämmung) eingesetzt werden.

Bei einer Ausbildung des Versteifungselementes gemäß Anspruch 2 ergibt sich durch den gegenüber der Flächenerstreckung des Versteifungselementes vorspringenden Rand eine deutliche Erhöhung der Steifigkeit des Versteifungselementes. Der Rand kann beispielsweise im Querschnitt trapezförmig ausgebildet sein.

Das Versteifungselement kann in besonders einfacher und kostengünstiger Weise durch Tiefziehen eines Metallbleches hergestellt werden. In einer bevorzugten Ausführungsform der Erfindung (Anspruch 3) besteht das Versteifungselement aus einem Aluminiumblech und weist eine Wandstärke von ca. 3 bis 4 mm auf. Sicken, insbesondere im flächigen Abschnitt des Versteifungselementes (Anspruch 4), erhöhen die Stabilität des Versteifungselementes.

Das Versteifungselement wird mit den Längsträgern verschraubt (Anspruch 5), so dass sowohl bei der Erstmontage als auch im Fall einer Reparatur ein verbesserter Zugang zum Antriebsaggregat, zum Getriebe und zu weiteren Komponenten des Kraftfahrzeuges gewährleistet ist. Öffnungen im Versteifungselement ermöglichen den Zugang beispielsweise zum Antriebsaggregat des Kraftfahrzeuges, ohne daß eine Demontage des Versteifungselementes erforderlich ist. Derartige Zugangsöffnungen befinden sich beispielsweise unterhalb einer Ablaßschraube an der Ölwanne. Zur Verbesserung der akustischen Dämmung kann das Versteifungselement gemäß Anspruch 6 mit einer Schicht eines akustisch dämmenden Materials versehen sein.

Ein mögliches Ausführungsbeispiel der Erfindung ist in der Zeichnung dargestellt und wird nachfolgend näher erläutert. Es zeigt:
- Figur 1: einen durch ein Versteifungselement verstärkten Hilfsrahmen eines Kraftfahrzeuges in der Draufsicht, mit Darstellung des Belastungsfalles einer einseitig wirkenden Längskraft,
- Figur 2: eine der Figur 1 entsprechende Darstellung, mit Darstellung des Belastungsfalles einer Seitenkraft und
- Figur 3: das Versteifungselement von Figur 1 und 2 in perspektivischer Ansicht.

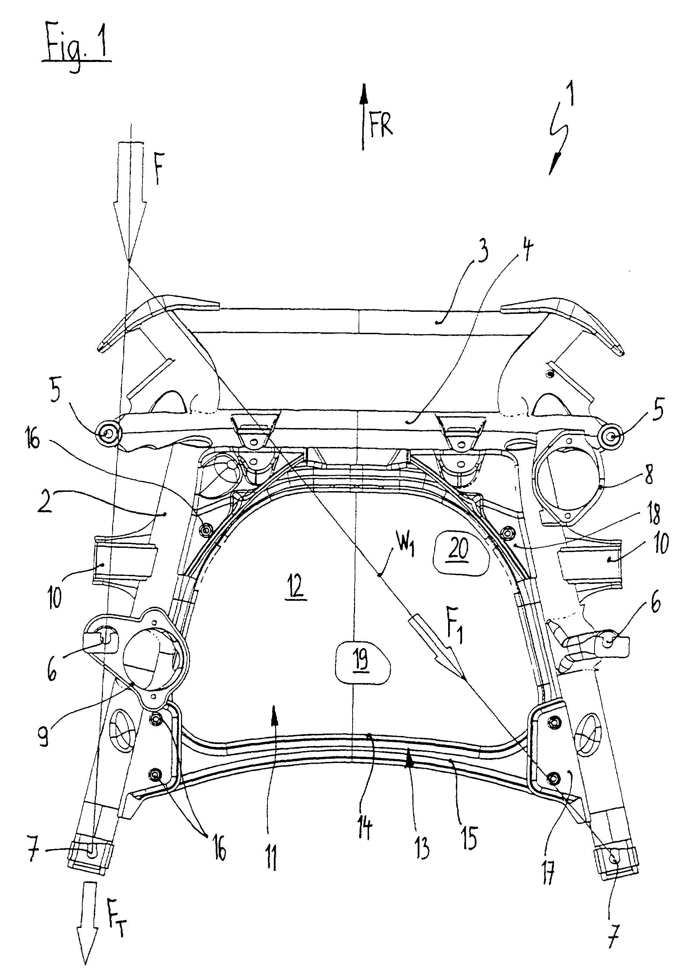

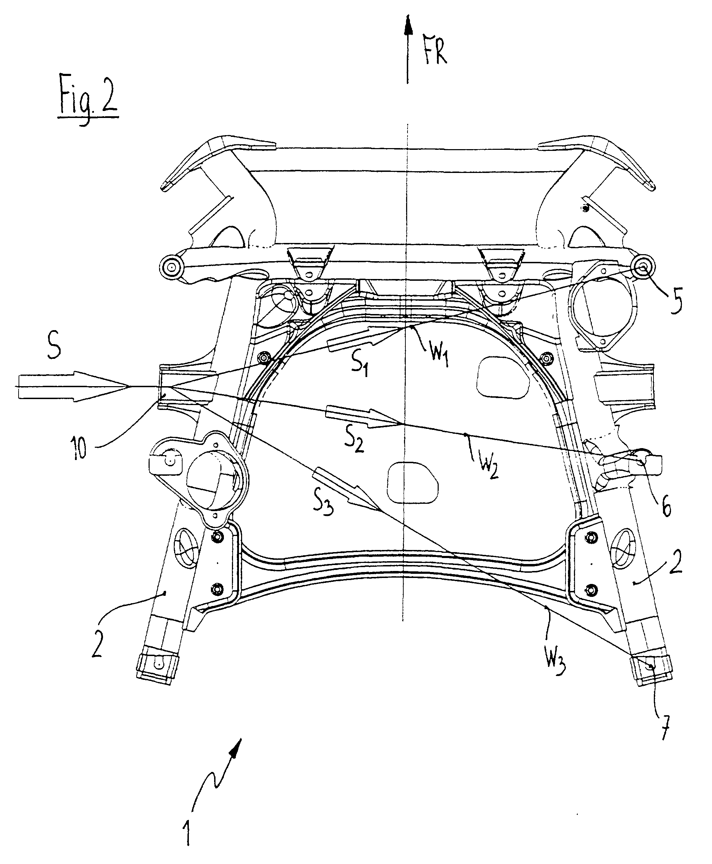

Die Figuren 1 und 2 zeigen einen als Vorderachsträger ausgebildeten und in seiner Gesamtheit mit 1 bezeichneten Hilfsrahmen, der einen rechten und einen linken Längsträger 2 aufweist, die in etwa parallel zur Fahrtrichtung FR verlaufen. An ihrem vorderen Endbereich sind die beiden Längsträger 2 durch Querträger 3 und 4 miteinander verbunden. Der Hilfsrahmen 1 wird durch Anbindungspunkte 5, 6 und 7 entlang der Längsträger 2 mit der Karosserie des Kraftfahrzeuges verbunden. Ein nicht dargestelltes Antriebsaggregat des Kraftfahrzeuges stützt sich über die Lagerpunkte 8 und 9 am Hilfsrahmen 1 ab. Mit den Längsträgern 2 verschweißte Lagerböcke 10 dienen der Aufnahme von Querlenkern des Fahrwerks.

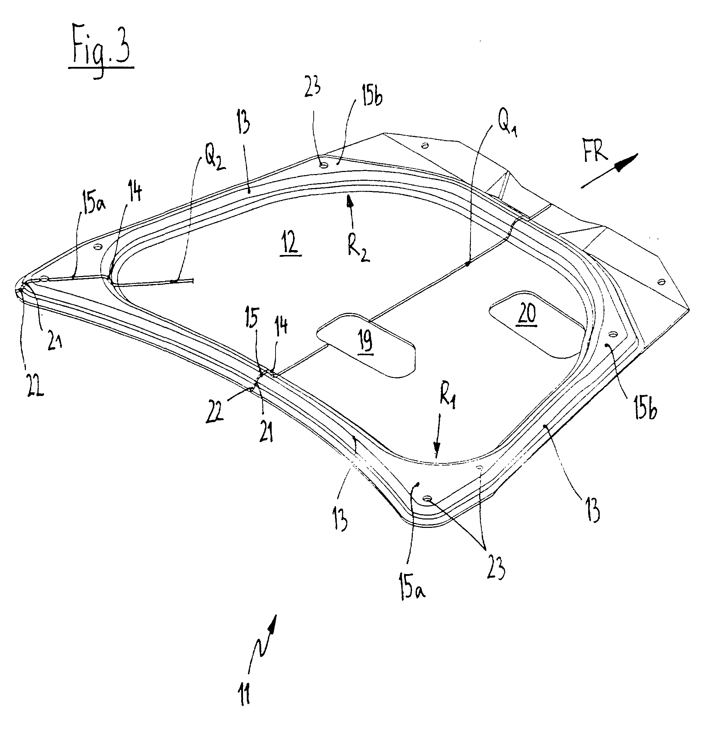

Erfindungsgemäß ist zwischen die beiden Längsträger 2 ein Versteifungselement 11 eingesetzt, das in Figur 3 näher dargestellt ist. Das Versteifungselement 11 weist einen flächigen Abschnitt 12, der die lichte Weite zwischen den beiden Längsträgern 2 ausfüllt sowie einen umlaufenden Rand 13 auf. Wie aus den in die perspektivische Ansicht der Figur 3 integrierten Querschnittsdarstellungen Q₁ und Q₂ hervorgeht, ist der Rand 13 im Querschnitt trapezförmig, mit einem schräg zum flächigen Abschnitt 12 abgebogenen ersten Wandabschnitt 14, einem etwa parallel zum flächigen Abschnitt 12 verlaufenden oberen Randabschnitt 15, einem wiederum schräg verlaufenden zweiten Wandabschnitt 21 sowie einem etwa in der Ebene des flächigen Abschnittes 12 gelegenen äußeren Randabschnitt 22. Insgesamt hat das Versteifungselement 11 die Form einer Wanne, deren oberer Randabschnitt 15 höhenversetzt gegenüber dem flächigen Abschnitt 12 ist. Durch die Wannenform des Versteifungselementes 11 wird für das Antriebsaggregat ein maximaler Freiraum nach unten geschaffen. Gleichzeitig erhöht der trapezförmige Rand 13 die Stabilität des Versteifungselementes 11 beträchtlich.

Das Versteifungselement 11 ist je Fahrzeugseite jeweils über drei Schrauben 16 an Konsolen 17 und 18 der Längsträger 2 angebunden. Die Schrauben 16 werden unterseitig im Freiraum des Randes 13 aufgenommen und stehen somit nicht über die Unterkante des Versteifungselementes 11 vor. Zugangsöffnungen 19 und 20 im flächigen Abschnitt 12 des Versteifungselements 11 ermöglichen die Wartung des Antriebsaggregates.

Die Konsolen 17 und 18 befinden sich in dem Bereich des Hilfsrahmens 1, in dem Kräfte in den Hilfsrahmen 1 eingeleitet werden. Die Anbindung des Versteifungselementes 11 an die Konsolen 17 und 18 des Hilfsträgers 1 erfolgt im Bereich von Randabschnitten 15a und 15b, die Durchgangsöffnungen 23 für die Schrauben 16 aufweisen. Durch die gegenüber den übrigen Randabschnitten 15 verbreiterten Abschnitte 15a und 15b geht der Rand 13 in den Eckbereichen des Versteifungselementes 11, also in den Anbindungsbereichen zu den Konsolen 17 und 18, mit großen Radien R₁ und R₂ in den flächigen Abschnitt 12 über, wodurch eine gleichmäßige Krafteinleitung in den flächigen Abschnitt 12 erzielt wird.

Bei einseitiger Einleitung einer entgegen der Fahrtrichtung FR gerichteten Kraft F, wie sie beispielsweise bei einem Offset-Crash auftritt (Figur 1), wird eine Teilkraft F-unmittelbar in den in direkter Fortsetzung gerichteten Längsträger 2 eingeleitet. Durch das als Schubfeld wirkende Versteifungselement 11 erfolgt zusätzlich eine Kraftweiterleitung entlang der Wirkungslinie W₁, die durch den hinteren Anbindungspunkt 7 an der gegenüberliegenden Seite des Hilfsrahmens 1 geht. Hierdurch wird eine Kraftkomponente F₁ in die der Belastung abgewandte Seite des Hilfsrahmens 1 eingeleitet.

Bei Einleitung einer Seitenkraft S in den Lagerbock 10 des Hilfsrahmens 1 (Figur 2) erfolgt eine Aufteilung der Kraft S in die drei Komponenten S₁, S₂ und S₃ entlang der Wirkungslinien W_{S1}, W_{S2} und W_{S3}, die jeweils vom Lagerbock 10 zu den drei gegenüberliegenden Anbindungspunkten 5, 6 und 7 führen. Auch hier gewährleistet das Versteifungselement 11 eine gezielte Kraftübertragung auf die gegenüberliegende Seite des Hilfsrahmens 1.

Durch die Integration mehrerer Funktionen (Steifigkeitserhöhung, akustische Abschirmung, Schutz des Antriebsaggregates vor mechanischen Beschädigungen. aerodynamisch wirkende Verkleidung) in einem Bauteil ergeben sich Vorteile hinsichtlich Kosten, Bauraum und Gewicht. Bei einem ausgeführten Kraftfahrzeug mit einem Leergewicht von ca. 15 kN wird beispielsweise durch ein erfindungsgemäßes Versteifungselement 11 mit einem Eigengewicht von ca. 30 N eine Erhöhung der Steifigkeit des Vorderachsträgers um 40% erreicht, neben einer indirekt bewirkten Versteifung des gesamten Vorderwagens des Kraftfahrzeugs.

## Patentansprüche

1. Als Achsträger ausgebildeter Hilfsrahmen (1) eines Kraftfahrzeugs, mit seitlichen Längsträgern, wobei an jedem Längsträger (2) ein Lagerbock (10) zur Aufnahme eines Lenkers des Fahrzeug-Fahrwerks sowie zwischen den Längsträgern (2) ein flächiges Versteifungselement (11) vorgesehen ist,
**dadurch gekennzeichnet, dass** die beiden Längsträger (2) im wesentlichen parallel zur Fahrzeug-Fahrtrichtung (FR) verlaufen und dass das im wesentlichen viereckige Versteifungselement (11) in Fahrtrichtung (FR) betrachtet vor und hinter den Lagerböcken (10) lösbar mit den Längsträgern (2) verbunden ist.

2. Hilfsrahmen nach Anspruch 1,
**dadurch gekennzeichnet, dass** das Versteifungselement (11) einen zumindest teilweise umlaufenden, im Querschnitt trapezförmigen Rand (13) mit wenigstens einem etwa senkrecht zur Flächenerstreckung des Versteifungselements gerichteten Wandabschnitt (14, 21) aufweist.

3. Hilfsrahmen nach Anspruch 1 oder 2,
**dadurch gekennzeichnet, dass** das Versteifungselement (11) von einem Aluminiumblech mit einer Wandstärke von ca. 3 bis 4 mm gebildet wird.

4. Hilfsrahmen nach einem der vorangegangenen Ansprüche,
**dadurch gekennzeichnet, dass** das Versteifungselement (11) in seinem flächigen Bereich (12) Versteifungssicken aufweist.

5. Hilfsrahmen nach einem der vorangegangenen Ansprüche,
**dadurch gekennzeichnet, dass** das Versteifungselement (11) über Schrauben (16) an am Hilfsrahmen (1) vorgesehenen Konsolen (17, 18) befestigt ist.

6. Hilfsrahmen nach einem der vorangegangenen Ansprüche,
**dadurch gekennzeichnet, dass** das Versteifungselement (11) mit einem akustisch dämmenden Material versehen ist.

## Claims

1. A reinforcing member (1) of a motor vehicle formed as an axle bearer, with side frame rails at the sides, in which on each side frame rail (2) a bearing bracket (10) is provided to accept a pivot spindle of the vehicle running gear and a flat stiffening element (11) is provided between the frame side rails (2),
**characterised in that** the two side frame rails (2) run essentially parallel to the direction of travel (FR) of the vehicle and that the essentially rectangular stiffening element (11) as seen in the direction of travel (FR) is joined removably to the side frame rails (2) in front of and behind the bearing brackets (10)

2. A reinforcing member according to Claim 1,
**characterised in that** the stiffening element (11) has a rim (13) shaped in cross section as a trapezium running at least partly around it with at least one wall section (14, 21) directed somewhat perpendicular to the flat surface expanse of the stiffening element.

3. A reinforcing member according to Claim 1 or Claim 2,
**characterised in that** the stiffening element (11) is formed from aluminium sheet with a wall thickness of ca. 3 to 4 mm.

4. A reinforcing member according to one of the foregoing Claims,
**characterised in that** the stiffening element (11) has stiffening beadings in its flat region (12).

5. A reinforcing member according to one of the foregoing Claims,
**characterised in that** the stiffening element (11) is fastened to consoles (17, 18) provided on the reinforcing member (1) by means of screws.

6. A reinforcing member according to one of the foregoing Claims,
**characterised in that** the stiffening element (11) is provided with an acoustic shielding material.

## Revendications

1. Cadre auxiliaire (1) constituant un support d'un essieu d'un véhicule automobile, comprenant deux longerons (2) latéraux portant chacun une chaise de palier (10) accueillant un bras de suspension du train roulant ainsi qu'un élément raidisseur plat (11) entre les longerons (2),
**caractérisé en ce que**
les deux longerons (2) sont essentiellement parallèles à la direction du déplacement de véhicule (FR) et l'élément raidisseur (11) essentiellement rectangulaire est, par rapport à la direction (FR), relié de manière amovible aux longerons (2) en avant et en arrière des chaises de palier (10).

2. Cadre auxiliaire selon la revendication 1,
**caractérisé en ce que**
l'élément raidisseur (11) présente au moins en partie périphérique, un bord (13) dont la section a la forme d'un trapèze avec au moins une partie de paroi (14, 21) à peu près perpendiculaire à l'étendue plate de l'élément raidisseur.

3. Cadre selon l'une des revendications 1 ou 2,
**caractérisé en ce que**
l'élément raidisseur (11) est constitué par une tôle d'aluminium d'une épaisseur de 3 à 4 mm.

4. Cadre selon l'une des revendications précédentes,
**caractérisé en ce que**
l'élément raidisseur (11), dans sa zone plate (12) présente des moulures de raidissement .

5. Cadre selon l'une des revendications précédentes,
**caractérisé en ce que**
l'élément raidisseur (11) est fixé par des vis (16) à des consoles (17, 18) prévues sur le cadre auxiliaire (1).

6. Cadre selon l'une des revendications précédentes,
**caractérisé en ce que**
l'élément raidisseur (11) est garni d'un matériau d'amortissement acoustique.
